Europäisches Patentamt

(19) European Patent Office  (11) Publication number: **0 230 737**
B1
Office européen des brevets

(12) **EUROPEAN PATENT SPECIFICATION**

(45) Date of publication of the patent specification: (51) Int. Cl.⁴: **C01B 11/02**
27.09.89

(21) Application number: **86309523.8**

(22) Date of filing: **08.12.86**

(54) Membrane pervaporation process for obtaining a chlorine dioxide solution.

(30) Priority: **18.12.85 CA 498042**  (73) Proprietor: **Tenneco Canada Inc., 2 Gibbs Road, Islington Ontario M9B 1R1(CA)**

(43) Date of publication of application:
**05.08.87 Bulletin 87/32**  (72) Inventor: **Twardowski, Zbigniew, 432 Burnaby Court, Mississauga Ontario, L4W 3W7(CA)**
Inventor: **McGilvery, James Duncan, 186 Markland Drive, Etobicoke Ontario, M9C 1P7(CA)**

(45) Publication of the grant of the patent:
**27.09.89 Bulletin 89/39**

(74) Representative: **Hamilton, Raymond et al, c/o Albright & Wilson Limited 1 Knightsbridge Green, London SW1X 7QD(GB)**

(84) Designated Contracting States:
**AT DE ES FR GB IT SE**

(56) References cited:
**EP-A- 0 158 798**

## Description

The present invention relates to a novel pervaporation process for the membrane transfer of chlorine dioxide between aqueous media.

Chlorine dioxide is used for bleaching a variety of materials, including wood pulps. Chlorine dioxide conveniently is formed by reduction of sodium chlorate in an acid aqueous reaction medium and the chlorine dioxide is evolved as a gas. The gas then is absorbed in water using absorption towers to form an aqueous solution for use.

Chlorine dioxide undergoes spontaneously decomposition when present at high partial pressures in the gas phase and steps are taken, during the production of chlorine dioxide, to dilute the gas phase to inhibit such decomposition. However, localized high partial pressures of chlorine dioxide inevitably occur in the gas space of commercial chlorine dioxide generators, leading to the formation of what are termed "puffs", or localized decompositions of chlorine dioxide, which is undesirable since such puffs result in a decreased yield of chlorine dioxide.

In accordance with one embodiment of the present invention, there is provided a method of formation of chlorine dioxide in a reaction zone having a hydrophobic gas-permeable membrane separating the reaction zone into two separate chambers. Chlorine dioxide is generated from aqueous reactants filling one chamber and passes through the membrane by pervaporation to an aqueous medium filling the other chamber to be dissolved therein.

In this method, the chlorine dioxide generated from aqueous chlorine dioxide-producing reactants is transferred rapidly across the membrane by membrane pervaporation to the recipient aqueous medium while the hydrophobic nature of the membrane prevents both the aqueous reaction medium and the aqueous recipient medium from passing through the membrane. The term "membrane pervaporation" is used herein to describe processes in which gases or vapours pass through a micro-porous hydrophobic membrane.

By proceeding in this manner, the incidence of chlorine dioxide puffing is eliminated while the necessity for an absorption tower also is eliminated, thereby enabling much simplified equipment to be used for chlorine dioxide generation.

In many chlorine dioxide-generating processes, chlorine is co-produced with the chlorine dioxide, and that gas also passes through the membrane to be dissolved in the recipient aqueous medium.

The present invention has particular application to the generation of chlorine dioxide and the dissolution of such generated chlorine dioxide in the recipient aqueous medium. However, the present invention is broadly applicable to the transfer of chlorine dioxide from a donor medium containing the same in a first chamber to a recipient aqueous medium receiving the same in a second chamber. The donor medium may comprise chlorine dioxide in any convenient form, including gaseous chlorine dioxide with or without other gases, such as chlorine, and an aqueous solution of chlorine dioxide, which may also have co-dissolved chlorine.

Figure 1 is a schematic representation of one embodiment of the process of this invention:
Figure 2 is a schematic representation of a second embodiment of the process of this invention; and
Figure 3 is a schematic representation of a third embodiment of the process of this invention.

Any convenient material of construction may be used for the membrane provided that the membrane is sufficiently porous to permit the flow of gases therethrough and sufficiently hydrophobic to prevent the passage of aqueous solution therethrough. One suitable material of construction is expanded polytetrafluoroethylene sheet, which is commercially-available under the trade mark "GORE-TEX". The procedure for formation of such expanded polytetrafluoroethylene is described in U.S. Patent No. 3,953,566.

The membrane may be provided as a composite with supporting materials to provide the structural strength required for use herein. Such supporting materials include a variety of polymeric materials, including polyvinyl chloride and polyethylene, and other materials, such as fibreglass scrims, felts and webs.

The pore sizes in the membrane may vary widely, depending on the desired flow rate of the chlorine dioxide through the membrane. The pores should not be so small as to prevent chlorine dioxide gas flow therethrough but also should not be so large that liquid flow is permitted. Usually, the membrane pore size varies from about 0.02 to about 15 microns, preferably from about 0.02 to about 5 microns.

The porosity of the membrane may vary widely, also depending upon the desired flow rate of chlorine dioxide through the membrane. Considerations of membrane strength also dictate the porosity chosen. Generally, the membrane porosity varies from about 50 to about 98%.

The thickness of the membrane is dictated by strength considerations rather than by any requirement based on process requirements. Generally, the supported membrane thickness varies from about 0.1 to about 2 mms.

It is not essential to the present invention that the membrane be constructed of hydrophobic material throughout its thickness, provided that the surfaces of the membrane contacting the aqueous media are hydrophobic and thereby prevent the flow of the aqueous media through the membrane.

The membrane may be provided in any desired geometric shape, generally planar form or in tubular form, as desired, to separate the transfer zone into the two chambers.

In one embodiment of the present invention, the first chamber is filled with an aqueous acidic chlorine dioxide generating medium. This reaction medium generally may be considered as one form of a donor medium comprising chlorine dioxide, specifically one form of an aqueous solution of chlorine dioxide from which the chlorine dioxide is transferred across the membrane.

A wide variety of chlorine dioxide-generating processes may be employed in the present invention. One class of such processes is based on sodium chlorate, which is reacted with a reducing agent in the presence of a strong mineral acid, such as sulphuric acid, hydrochloric acid and phosphoric acid. Another class of such processes is based on sodium chlorite, which is reacted with oxidizing agent and/or a strong mineral acid. Combinations of sodium chlorate and sodium chlorite also may be employed.

Specific examples of combinations of reactants which may be employed are (a) sodium chlorate, sodium chloride and and sulphuric acid, (b) sodium chlorate and hydrochloric acid, (c) sodium chlorate, sodium chlorite, sodium chloride and sulphuric acid, (d) sodium chlorate, sodium chlorite and hydrochloric acid, (e) sodium chlorate, sulphur dioxide and sulphuric acid, (f) sodium chlorate, methanol and sulphuric acid, (g) sodium chlorite and chlorine, (h) sodium chlorite and hydrochloric acid and/or sulphuric acid, (i) sodium chlorite, oxidizing gas and sulphuric acid, (j) sodium chlorate, sodium chloride, hydrogen peroxide and/or methanol and sulphuric acid, (k) sodium chlorite, sodium hypochlorite and hydrochloric acid and/or sulphuric acid, and (l) sodium chlorate, glucose and sulphuric acid. Other suitable combinations of reactants also may be employed.

Usually, the process of the present invention is carried out continuously, with chlorine dioxide-generating reactants being fed to one compartment and the chlorine-dioxide recipient aqueous solution being fed to the other compartment. However, a batch operation may be effected, if desired.

The donor medium located in the one chamber may take the form of any source of chlorine dioxide and in another embodiment of the invention may comprise an aqueous chlorine dioxide solution obtained as the aqueous effluent from an absorption tower of a conventional chlorine dioxide generating operation, for example, any of those generally known by the designations R2, R3, R5, R6, R7 or R8.

This embodiment of the invention is particularly useful where the chlorine dioxide present in the solution is required to be dissolved in another aqueous medium. Using the present invention, pervaporation of the chlorine dioxide from the donor aqueous medium to the recipient aqueous medium is effected across the membrane, rather than having to strip out the chlorine dioxide from the donor aqueous medium and then redissolve the stripped chlorine dioxide in the recipient aqueous medium, which otherwise would be the case.

The chlorine dioxide present in one compartment and flowing through the hydrophobic gas permeable membrane may be dissolved in any aqueous medium in the other compartment. In one embodiment, the chlorine dioxide is dissolved in water to form an aqueous solution of the chlorine dioxide. In another embodiment, the aqueous medium may be wood pulp slurry, so that the chlorine dioxide bleaches the wood pulp. In a further embodiment, the recipient aqueous medium is waste water and the dissolution of the chlorine dioxide causes disinfection.

The pervaporation transfer of chlorine dioxide from one aqueous solution to another may be employed to form the aqueous solution of chlorine dioxide used as feed to an electrolytic process for formation of sodium chlorite. It is known to produce sodium chlorite electrolytically be feeding an aqueous solution of chlorine dioxide to the cathode compartment and an aqueous solution of sodium hydroxide to the anode compartment of a divided cell. The process is described in U.K. Patent No. 2,002,033.

The process of the present invention may be employed to provide the catholyte for this electrolytic process of forming sodium chlorite. In one procedure, chlorine dioxide-depleted catholyte is circulated to the chlorine dioxide generator to dissolve chlorine dioxide flowing across the membrane, before being returned to the cathode compartment.

In another procedure, chlorine dioxide-depleted catholyte is circulated to one compartment of a pervaporation transfer vessel while an aqueous chlorine dioxide solution is fed to the other compartment. Chlorine dioxide flows across the membrane and is dissolved in the catholyte, before the chlorine dioxide-enriched catholyte is returned to the cathode compartment. The donor aqueous chlorine dioxide solution may be an aqueous chlorine dioxide solution obtained from an absorption tower of a conventional chlorine dioxide generating process or may be an aqueous chlorine dioxide solution formed using the process of the present invention.

The latter procedure is particularly useful when the chlorine dioxide-generating process co-produces chlorine. Such coproduced chlorine also usually flows across the membrane to be dissolved in the recipient aqueous medium. The presence of dissolved chlorine in the catholyte feed to the sodium chlorite-producing electrolytic process decreases the current efficiency and introduces more impurities into the electrolysis process and hence is not desired.

In accordance with one preferred embodiment of the invention, the recipient aqueous medium for the generated chlorine dioxide is acidified so as to inhibit dissolution of the co-produced chlorine. The chlorine dioxide solution which results then may be forwarded to a second transfer zone wherein the preferentially-dissolved chlorine dioxide then can be transferred by pervaporation to the chlorine dioxide-depleted catholyte. Since the catholyte is required to be alkaline, the two-stage transfer of chlorine dioxide from the chlorine dioxide-generating reactants to the catholyte is adopted.

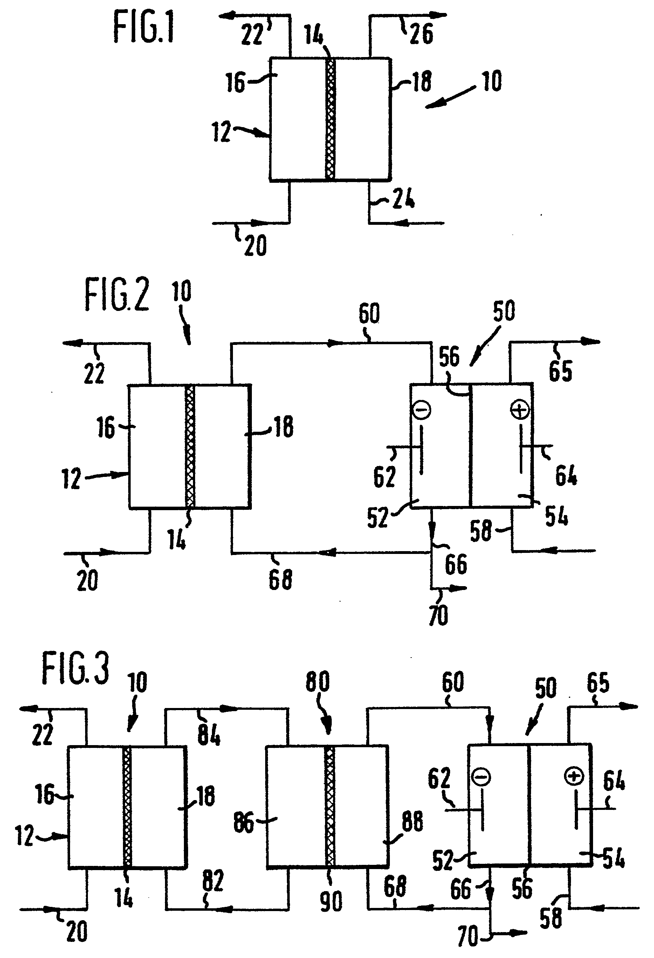

Referring to Figure 1, a chlorine dioxide generator 10 comprises a reaction vessel 12 having a gas-permeable hydrophobic membrane 14 separating the internal volume into two compartments or chambers 16 and 18. Chlorine dioxide-generating reactants are fed by line 20 to the compartment 16 for generation of chlorine dioxide in the compartment 16.

As noted earlier, a variety of combinations of reactants may be used to generate chlorine dioxide. Usually, the acidic reactant is fed to the generator 10 separately from the other reactants. The compartment 16 may be provided with heating means, if desired, so as to effect the chlorine dioxide generation at an elevated temperature. Spent generation chemicals leave the compartment 16 by line 22.

An aqueous medium for the dissolution of chlorine dioxide, usually water, is fed to the compartment 18 by line 24. Chlorine dioxide generated in the compartment 16 from the reactants fed by line 20 passes across the gas-permeable membrane 14 to the aqueous phase in the compartment 18 for dissolution therein. The hydrophobic nature of the membrane 14 prevents passage of the aqueous media therethrough. Aqueous chlorine dioxide solution is removed by line 26.

The chlorine dioxide-generating reactants are fed by line 20 at a flow rate sufficient to maintain the compartment 16 full of aqueous reactants while the aqueous medium is fed by line 24 at a flow rate sufficient to maintain the compartment 18 full of aqueous medium. In this way, no gas space is present in either compartment, so that there is no opportunity for chlorine dioxide puffing to occur.

Referring now to Figure 2, there is illustrated therein the combination of the chlorine dioxide generator 10 of the present invention with an electrolytic process for forming sodium chlorite. An electrolytic cell 50 has a cathode compartment 52 separated from an anode compartment 54 by a suitable cation-permeable membrane 56.

Sodium sulphate or other suitable source of sodium ions is fed to the anode compartment 54 by line 58 while aqueous chlorine dioxide solution is fed to the cathode compartment 52 by line 60. Upon application of an electric current between electrodes 62, 64 respectively located in the cathode and anode compartments 52, 54, sodium ions migrate across the membrane 56 as the chlorine dioxide is electrolyzed to chlorite ions, and sodium chlorite thereby is formed. The depleted sodium ion feed is removed from the anode compartment by line 65.

The sodium chlorite solution is removed from the cathode compartment 52 and is recycled by lines 66, 68 to the compartment 18 of the chlorine dioxide generator 18 for dissolution of chlorine dioxide therein. The resulting solution exiting the compartment 18 then is recycled by line 60 to the cell 50 as the catholyte. A bleed off line 70 is provided for recovery of product sodium chlorite.

Referring to Figure 3, there is illustrated the combination of the chlorine dioxide generator 10 of the present invention with the electrolytic cell 50 for forming sodium chlorite, along with an intermediate chlorine dioxide transfer vessel 80. The embodiment of Figure 3 is particularly applicable to a process wherein the chlorine dioxide-generating process occurring in the chamber 16 coproduces chlorine.

The recipient aqueous medium which passes to the compartment 18 by line 82 is acidified to inhibit the dissolution of the chlorine therein but to permit the chlorine dioxide to be dissolved. The chlorine dioxide solution which results from the compartment 18 is passed by line 84 to one compartment 86 of the transfer vessel 80.

The chlorine dioxide-depleted sodium chlorite solution in line 68 is passed to the compartment 88 on the opposite side of the membrane 90 from the compartment 86. The membrane 90 is of the same type as membrane 14. Chlorine dioxide present in the solution in compartment 86 passes across the membrane 90 to be dissolved in the sodium chlorite solution, so as to form the catholyte feed line in 60 for the electrolytic cell 50.

The embodiment of Figure 3 is advantageous for producing a catholyte feed for sodium chlorite production when the chlorine dioxide-generating process coproduces chlorine. Such chlorine is undesirable in the electrolytic production of sodium chlorite and the acidification of the recipient medium in line 82 inhibits dissolution of the chlorine. The selective dissolution of chlorine dioxide in the chlorine dioxide-depleted sodium chlorite solution cannot be employed, since the latter medium is alkaline. It is necessary to utilize an intermediate transfer vessel 80 for the chlorine dioxide.

## EXAMPLES

An experimental test apparatus was set up comprising two plates constructed of KYNAR (Trademark) material and two silicone rubber of EPDM gaskets forming compartments for donating and receiving solutions. The backplates were fitted with inlet and outlet ports and 1 mm thick nettings constructed of VEXAR (Trademark) material were placed into each compartment to support the membrane and to promote turbulent flow of the solution. Each Vexar piece had a volume of about 0.9 cm³.

KYNAR is a trademark of Pennwalt Corporation for a polyvinylidene bifluoride polymer. The abbreviation EPDM refers to an ethylene-propyl-diene monomer rubber, the one employed being that designated 6962 and sold by Prince Rubber and Plastic Company. VEXAR is a trademark of DuPont for a polypropylene mesh.

A 1.0 um membrane constructed of "GORE-TEX" material (i.e. expanded polytetrafluoroethylene) supported on PVC-coated fibreglass scrim was sandwiched between soft silicone rubber gaskets and had

4

an exposed area of 32 cm². The compartment volumes were both 5.6 cm³ and 8.9 cm³ respectively for 2 and 3 mm gaskets. The size of the empty rectangular channels formed were 50 x 2 mm (thinner gasket) and 50 x 3 mm (thicker gasket).

A 1.1 litre solution of ClO₂ was circulated on one side of the membrane while the same volume of the receiving solution was circulated at the same rate on the opposite side. Samples of the receiving solution were withdrawn at regular intervals, usually 30 or 60 minutes, and analyzed for ClO₂ content.

The results obtained in the experiments were expressed in terms of pervaporation coefficient K, which described ClO₂ flux normalized to the unitary concentration driving force. The expression K is calculated as follows:

$$K = \frac{\ln\left[1 - \frac{(1 + V_R/V_D)\,C_R}{C_D'}\right]}{-(A/V_R)(1 + V_R/V_D)\,t}$$

where $V_D$ = volume of donating solution (litres)
$C_D'$ = initial ClO₂ concentration in donating solution (gpl, games per litre)
$V_R$ = volume of receiving solution (litres)
$C_R$ = ClO₂ concentration in receiving solution (gpl)
K = pervaporation constant (g ClO₂/cm² min.gpl)
A = membrane area (cm²)
t = time (min).

Example 1

In a first series of experiments, the transfer of ClO₂ as a function of linear solution rate and temperature was determined for an aqueous chlorine dioxide donating solution and H₂O as the receiving solution. The results are reproduced in the following Table I:

Table 1

| Run No. | Gasket size, mm | Temp.* [°C] | Total time [min.] | Linear soln. velocity [cm/sec] | GpL ClO₂ in donating solution Initial | Final | Final GPl ClO₂ in receiving solution | AVG. K × 10⁶ g/cm² min.gpL |
|---|---|---|---|---|---|---|---|---|
| 1 | 2 | 25 | 240 | 2.8 | 9.2 | 6.0 | 2.4 | 53.9 |
| 2 | 2 | 25 | 180 | 4.7 | 9.7 | 5.4 | 2.6 | 75.7 |
| 3 | 2 | 25 | 180 | 5.9 | 8.2 | 4.7 | 2.7 | 33.6 |
| 4 | 2 | 60 | 120 | 4.7 | 6.9 | 2.4 | 1.9 | 120 |
| 5 | 2 | 60 | 180 | 4.7 | 9.4 | 4.6 | 3.4 | 131 |
| 6 | 2 | 50 | 240 | 4.7 | 9.9 | 4.7 | 3.8 | 114 |
| 7 | 3 | 25 | 240 | 3.7 | 6.4 | 4.0 | 1.8 | 62.4 |
| 8 | 3 | 25 | 180 | 5.0** | 7.4 | 4.3 | 2.2 | 87.6 |
| 9 | 3 | 25 | 180 | 8.0** | 4.1 | – | 1.5 | 134 |

\* Refers to the temp. of donating solution only.
\*\* Additional Saran packing used, i.e. channel cross-section reduced by 0.5 cm² (est).

The variation in K values with variations in circulation rate and temperature may be seen from the results of this Table I.

Example 2

In a second set of experiments, sodium chlorite solution (300 gpl NaClO₂) was used as the recipient medium at ambient temperature at varying recirculation rates. Each experiment ran 30 minutes. The results obtained are set forth in the following Table 2:

Table 2

| Linear soln. velocity [cm/sec] | Avg. donating soln. $ClO_2$ conc. [gpL] | Final $ClO_2$ in chlorite soln. [gpL] | K-value $g/cm^2$ min gpL $\times 10^6$ |
|---|---|---|---|
| 4.7 | 3.52 | 0.12 | 37.2 |
| 5.9 | 2.97 | 0.18 | 68.1 |

As may be seen from these results, the K-values observed were about 50% lower than under analogous conditions for water as a recipient, indicating some transport inhibiting effects associated with the decreased solubility of chlorine dioxide in concentrated sodium chlorite solution. Nevertheless, the K-values were considered reasonable.

In summary of this disclosure, the present invention provides a novel method of chlorine dioxide production involving membrane pervaporation of chlorine dioxide from aqueous chlorine dioxide-producing reactants to a recipient aqueous medium. Modifications are possible within the scope of this invention.

**Claims**

1. A process for the formation of an aqueous solution of chlorine dioxide, which comprises, the steps of:
   (i) providing a donor medium comprising chlorine dioxide in a first chamber of a transfer zone having a chlorine dioxide-permeable hydrophobic membrane separating said first chamber from a second chamber in said transfer zone,
   (ii) providing a recipient aqueous medium in said second chamber and
   (iii) permitting chlorine dioxide to flow across the said membrane from said first chamber to said second chamber to be dissolved in said recipient aqueous medium.

2. A process according to claim 1 characterised in that said donor medium comprises an aqueous acidic chlorine dioxide generating medium.

3. A process according to claim 1 characterised in that said donor medium comprises an aqueous solution of chlorine dioxide formed by the dissolution in water of the gaseous products produced in a chlorine dioxide generating process.

4. A process according to claim 1 characterised in that said donor medium comprises an aqueous solution of chlorine dioxide formed by the transfer of chlorine dioxide across a chlorine dioxide-permeable hydrophobic membrane from a donor medium which is an acidic chlorine dioxide generating medium.

5. A process according to claim 1 characterised in that the donor medium comprises an aqueous solution of chlorine dioxide formed by the dissolution in water of chlorine dioxide transferred across a chlorine dioxide-permeable hydrophobic membrane from a second donor medium comprising chlorine dioxide.

6. A process according to any of claims 1 to 5 characterised in that the recipient aqueous medium is water.

7. A process according to any of claims 1 to 5 characterised in that the recipient aqueous medium is an aqueous slurry of wood pulp, whereby the wood pulp is bleached by said chlorine dioxide flowing across the membrane.

8. A process according to any of claims 1 to 5 characterised in that the recipient aqueous medium is an aqueous solution of sodium chlorite.

9. A process according to claim 8 characterised in that the recipient aqueous medium is a spent catholyte produced from an electrolytic process for the production of sodium chlorite.

10. A process according to claim 9 characterised in that the chlorine dioxide enriched recipient medium is subsequently electrolysed to form sodium chlorite and the spent electrolyte is recycled to the second chamber as the recipient medium.

11. A process according to claim 2 or any of claims 5 to 10 characterised in that the chlorine dioxide-generating reactants further produce chlorine and said chlorine is also permitted to flow across said membrane from said first chamber to said second chamber.

12. A process according to any of claims 1 to 10 characterised in that the donor medium further comprises chlorine and the recipient aqueous medium is acidified to inhibit the flow of chlorine across the membrane and to inhibit dissolution of the chlorine in the recipient aqueous medium.

13. A process according to any of the preceding claims characterised in that the membrane comprises a sheet of expanded polytetrafluoroethylene.

14. A process according to any of the preceding claims characterised in that the membrane has a pore size of about 0.02 to about 15 microns and a porosity of about 50 to about 98%.

## Revendications

1. Procédé pour la formation d'une solution aqueuse de bioxyde de chlore, qui comprend les étapes consistant à:

(i) fournir un milieu donneur, comprenant du bioxyde de chlore dans une première chambre d'une zone de transfert ayant une membrane hydrophobe, perméable au bioxyde de chlore, séparant ladite première chambre d'une seconde chambre dans ladite zone de transfert,

(ii) fournir un milieu aqueux récepteur dans ladite seconde chambre, et

(iii) laisser le bioxyde de chlore circuler à travers ladite membrane, depuis ladite première chambre vers ladite seconde chambre pour se dissoudre dans ledit milieu aqueux récepteur.

2. Procédé selon la revendication 1, caractérisé en ce que ledit milieu donneur comprend un milieu aqueux acide engendrant de bioxyde de chlore.

3. Procédé selon la revendication 1, caractérisé en ce que ledit milieu donneur comprend une solution aqueuse de bioxyde de chlore, formée par la dissolution dans l'eau des produits gazeux obtenus dans un procédé engendrant du bioxyde de chlore.

4. Procédé selon la revendication 1, caractérisé en ce que ledit milieu donneur comprend une solution aqueuse de bioxyde de chlore, formée par le transfert du bioxyde de chlore à travers une membrane hydrophobe perméable au bioxyde de chlore, à partir d'un milieu donneur qui est un milieu acide engendrant du bioxyde de chlore.

5. Procédé selon la revendication 1, caractérisé en ce que le milieu donneur comprend une solution aqueuse de bioxyde de chlore, formée par la dissolution dans l'eau de bioxyde de chlore transféré par passage à travers une membrane hydrophobe, perméable au bioxyde de chlore, à partir d'un second milieu donneur comprenant du bioxyde de chlore.

6. Procédé selon l'une quelconque des revendications 1 à 5, caractérisé en ce que le milieu aqueux récepteur est de l'eau.

7. Procédé selon l'une quelconque des revendications 1 à 5, caractérisé en ce que le milieu aqueux récepteur est une suspension aqueuse de pâte de bois, la pâte de bois étant ainsi blanchie par ledit bioxyde de chlore qui traverse la membrane.

8. Procédé selon l'une quelconque des revendications 1 à 5, caractérisé en ce que le milieu aqueux récepteur est une solution aqueuse de chlorite de sodium.

9. Procédé selon la revendication 8, caractérisé en ce que le milieu aqueux récepteur est un catholyte usagé produit à partir d'un procédé d'électrolyse pour la production de chlorite de sodium.

10. Procédé selon la revendication 9, caractérisé en ce que le milieu récepteur, enrichi en bioxyde de chlore, est ensuite électrolysé pour former du chlorite de sodium, et l'électrolyte usagé est recyclé, à titre de milieu récepteur, vers la seconde chambre.

11. Procédé selon la revendication 2 ou selon l'une quelconque des revendications 5 à 10, caractérisé en ce que les réactifs engendrant du bioxyde de chlore produisent en outre du chlore, et on laisse également ce chlore traverser ladite membrane de ladite première chambre vers ladite seconde chambre.

12. Procédé selon l'une quelconque des revendications 1 à 10, caractérisé en ce que le milieu donneur comprend en outre du chlore et en ce que le milieu aqueux récepteur est acidifié pour inhiber l'écoulement du chlore à travers la membrane et pour inhiber la dissolution du chlore dans le milieu aqueux récepteur.

13. Procédé selon l'une quelconque des revendications précédentes, caractérisé en ce que la membrane comprend une feuille de polytétrafluoréthylène expansé.

14. Procédé selon l'une quelconque des revendications précédentes, caractérisé en ce que la membrane a une dimension des pores d'environ 0,02 à environ 15 µm et une porosité d'environ 50 à environ 98%.

## Patentansprüche

1. Verfahren zur Bildung einer wässrigen Lösung von Chlordioxid, das folgende Schritte umfaßt:

(I) Vorgabe eines abgebenden Mediums, das Chlordioxid enthält, in der ersten Kammer eines Übergangsbereichs, der eine hydrophobe für Chlordioxid permeable Membran aufweist, welche diese erste Kammer von einer zweiten Kammer in dem Übergangsbereich trennt,

(II) Vorgabe eines aufnehmenden wäßrigen Mediums in dieser zweiten Kammer, und

(III) Durchströmenlassen des Chlordioxids durch die Membran von der ersten Kammer in die zweite Kammer, wo es in dem aufnehmenden wäßrigen Medium gelöst wird.

2. Verfahren nach Anspruch 1, dadurch gekennzeichnet, daß das abgebende Medium ein wässriges, saures, Chlordioxid erzeugendes Medium umfaßt.

3. Verfahren nach Anspruch 1, dadurch gekennzeichnet, daß das abgebende Medium eine wässrige Lösung von Chlordioxid umfaßt, die gebildet wird durch die Lösung in Wasser jener gasförmigen Produkte, die in einem Chlordioxid erzeugenden Verfahren erzeugt werden.

4. Verfahren nach Anspruch 1, dadurch gekennzeichnet, daß das abgebende Medium eine wässrige Lösung von Chlordioxid umfaßt, die durch den Übergang von Chlordioxid durch eine hydrophobe für Chlordioxid permeable Membran aus einem abgebenden Medium, welches ein saures, Chlordioxid erzeugendes Medium ist, gebildet wird.

5. Verfahren nach Anspruch 1, dadurch gekennzeichnet, daß das abgebende Medium eine wässrige Lösung von Chlordioxid umfaßt, die durch Auflösen in Wasser von Chlordioxid gebildet wird, welches von einem zweiten abgebenden Medium, das Chlordioxid enthält, durch eine hydrophobe für Chlordioxid permeable Membran durchgegangen war.

6. Verfahren nach einem der Ansprüche 1 bis 5, dadurch gekennzeichnet, daß das aufnehmende wässrige Medium Wasser ist.

7. Verfahren nach einem der Ansprüche 1 bis 5, dadurch gekennzeichnet, daß das aufnehmende wässrige Medium eine wässrige Aufschlämmung von Holzschliff ist, wodurch der Holzschliff durch das durch die Membran strömende Chlordioxid gebleicht wird.

8. Verfahren nach einem der Ansprüche 1 bis 5, dadurch gekennzeichnet, daß das aufnehmende wässrige Medium eine wässrige Lösung von Natriumchlorit ist.

9. Verfahren nach Anspruch 8, dadurch gekennzeichnet, daß das aufnehmende wäßrige Medium ein verbrauchter Katholyt ist, der bei einem elektrolytischen Verfahren zur Herstellung von Natriumchlorit gebildet wurde.

10. Verfahren nach Anspruch 9, dadurch gekennzeichnet, daß das an Chlordioxid angereicherte aufnehmende Medium danach elektrolysiert wird, um Natriumchlorit zu bilden, und daß der verbrauchte Elektrolyt als aufnehmendes Medium in die zweite Kammer rückgeführt wird.

11. Verfahren nach Anspruch 2 oder nach einem der Ansprüche 5 bis 10, dadurch gekennzeichnet, daß die Chlordioxid erzeugenden Reaktanten außerdem Chlor erzeugen und daß dieses Chlor ebenso durch die Membran aus der ersten Kammer in die zweite Kammer strömen kann.

12. Verfahren nach einem der Ansprüche 1 bis 10, dadurch gekennzeichnet, daß das abgebende Medium außerdem Chlor enthält, und daß das aufnehmende wässrige Medium angesäuert wird, um den Durchstrom des Chlors durch die Membran zu hemmen und die Auflösung des Chlors in dem aufnehmenden wässrigen Medium zu hemmen.

13. Verfahren nach einem der vorhergehenden Ansprüche, dadurch gekennzeichnet, daß die Membran aus einer Lage geschäumten Polytetrafluoräthylens besteht.

14. Verfahren nach einem der vorhergehenden Ansprüche, dadurch gekennzeichnet, daß die Membran eine Porengröße von etwa 0,02 bis etwa 15 µm und eine Porosität von etwa 50 bis etwa 98% aufweist.

FIG.1

FIG.2

FIG.3